# EUROPÄISCHE PATENTANMELDUNG

(11) **EP 2 511 638 A1**
(43) Veröffentlichungstag der Anmeldung: **17.10.2012**
(21) Anmeldenummer: 11162238.7
(22) Anmeldetag: 13.04.2011
(51) Int. Cl.: F27B 3/28, F27D 11/10, F27D 19/00, F27D 21/00, C21C 5/52

(54) **Verfahren zum Betrieb eines Elektrolichtbogenofens, Vorrichtung zur Durchführung des Verfahrens sowie ein Elektrolichtbogenofen mit einer solchen Vorrichtung**

(71) Anmelder: SIEMENS AKTIENGESELLSCHAFT, 80333 München (DE)
(72) Erfinder: Matschullat, Thomas, 90542, Eckental (DE); Rieger, Detlef, 85598, Baldham (DE)

(57) **Zusammenfassung**

Verfahren zum Betrieb eines Elektrolichtbogenofens, Vorrichtung zur Durchführung des Verfahrens sowie ein Elektrolichtbogenofen mit einer solchen Vorrichtung

Im Betrieb eines Lichtbogenofens (1), umfassend zumindest eine Elektrode (3a, 3b, 3c) zum Erzeugen einer Schmelze, werden Schwingungen an einer Wand (2a) eines Ofengefäßes (2) gemessen, wodurch eine Schlackenhöhe (Hᵣₑₗ) der Schmelze ermittelt wird. Eine schnelle Reaktion auf die Änderung der Schlackenhöhe wird ermöglicht, indem bei Abweichungen eines ermittelten Ist-Werts (A, B, C) der Schlackenhöhe (Hᵣₑₗ) von einem Soll-Wert (S) die Lichtbogenlänge der zumindest einen Elektrode (3a, 3b, 3c) angepasst wird.

## Beschreibung

Verfahren zum Betrieb eines Elektrolichtbogenofens, Vorrichtung zur Durchführung des Verfahrens sowie ein Elektrolichtbogenofen mit einer solchen Vorrichtung

Die Erfindung betrifft ein Verfahren zum Betrieb eines Elektrolichtbogenofens, umfassend zumindest eine Elektrode zum Erzeugen einer Schmelze in einem Ofengefäß, wobei Schwingungen an einer Wand des Ofengefäßes gemessen werden, durch welche eine Schlackenhöhe der Schmelze ermittelt wird. Die Erfindung betrifft weiterhin eine Vorrichtung zur Durchführung dieses Verfahrens sowie einen Elektrolichtbogenofen mit einer derartigen Vorrichtung.

Bei der Erzeugung von Stahl in einem Elektrolichtbogenofen wird eine Schaumschlacke oder Schlacke gebildet und durch Einblasen eines Mediengemisches, z.B. eines Gemisches aus Einblaskohle und Sauerstoff, zum Aufschäumen gebracht, um das Energieeinbringen mittels eines von den Elektroden des Elektrolichtbogenofens erzeugten Lichtbogens zu verbessern bzw. die Verluste durch Abstrahlung zu verringern. Der Zustand der Schaumschlacke der Schmelze ist ein Maß für die Effektivität des Energieeinbringens. Ziel ist es daher, einen möglichst an die Prozessbedürfnisse angepassten Pegel der Schaumschlacke im Ofeninneren zu erreichen.

Aus der WO 2007/009924 ist es bekannt, die Energiezufuhr in einen Elektrolichtbogenofen unter Zuhilfenahme von elektrischen Sensoren zu ermitteln und Schwingungen am Elektrolichtbogenofen zu messen. Durch Auswertung der Messdaten der elektrischen Sensoren und durch Auswertung der gemessenen Schwingungen wird die Höhe der Schaumschlacke bestimmt.

Aus der WO 2010/088972, ist weiterhin bekannt, zur Regelung eines Kohlenmonoxid-Ausstoßes eines Elektrolichtbogenofens die Höhe der Schaumschlacke zu bestimmen, wobei der Kohlenstoffeintrag und/oder die Sauerstoffzufuhr derart geregelt werden, dass die Höhe der Schaumschlacke unterhalb eines Maximalwertes gehalten wird.

Die Regelung des Kohlenstoffeintrags hat jedoch den Nachteil, dass falls kein konstanter und gleichförmiger Schlackenhöhenstand für alle Bereiche des Elektrolichtbogenofens in kurzer Zeit erreicht wird, bedingt durch Verzug in der Kohlenförderung, zu viel Strahlungsleistung an die Wände abgegeben wird. An den Ofenwänden werden dabei Hot Spots erzeugt, die Energieverluste nach sich ziehen und den Verschleiß erhöhen.

Der Erfindung liegt die Aufgabe zugrunde, eine schnelle Reaktion auf die Änderung der Schlackenhöhe im Elektrolichtbogenofen zu ermöglichen.

Die Aufgabe wird erfindungsgemäß gelöst durch ein Verfahren zum Betrieb eines Elektrolichtbogenofens, umfassend zumindest eine Elektrode zum Erzeugen einer Schmelze in einem Ofengefäß, wobei Schwingungen an einer Wand des Ofengefäßes gemessen werden, durch welche eine Schlackenhöhe der Schmelze ermittelt wird und wobei bei Abweichungen eines ermittelten Ist-Werts der Schlackenhöhe von einem Soll-Wert Steuer-und/oder Regelsignale gegeben werden, durch welche eine Lichtbogenlänge der zumindest einen Elektrode angepasst wird.

Die Aufgabe wird weiterhin erfindungsgemäß gelöst durch eine Vorrichtung, umfassend
- mindestens ein Körperschallsensor zum Erfassen von Schwingungen an einer Wand eines Ofengefäßes eines Elektrolichtbogenofens, wobei der Elektrolichtbogenofen (1) zumindest eine Elektrode zum Erzeugen einer Schmelze im Ofengefäß aufweist,
- eine Recheneinheit zum Berechnen des Ist-Werts der Schlackenhöhe im Ofengefäß,
- sowie eine Steuer- oder Regeleinheit zur Anpassung der Lichtbogenlänge der zumindest einen Elektrode bei Abweichungen des Ist-Werts der Schlackenhöhe vom Soll-Wert.

Die Aufgabe wird zudem erfindungsgemäß gelöst durch einen Elektrolichtbogenofen mit einer solchen Vorrichtung.

Die in Bezug auf das Verfahren nachstehend angeführten Vorteile und bevorzugten Ausgestaltungen sind sinngemäß auf die Vorrichtung und den Elektrolichtbogenofen zu übertragen.

Mit Soll-Wert wird hierbei insbesondere kein absoluter Wert, sondern ein zulässiger Bereich bezeichnet, der durch einen zulässigen Maximalwert und zulässigen Minimalwert gekennzeichnet ist. Beim Überschreiten bzw. Unterschreiten des Soll-Bereichs wird somit der zulässige Maximalwert überschritten bzw. der zulässige Minimalwert unterschritten.

Die Erfindung basiert auf der Idee, als Reaktion auf eine Veränderung der Höhe der Schlacke im Ofengefäß die Länge der im Elektrolichtbogenofen erzeugten Lichtbögen zu beeinflussen. Dies erfolgt durch eine entsprechende Regelung der mindestens einen Elektrode des Elektrolichtbogenofens, insbesondere über Regelung der Impedanz der Elektrode. Dabei gilt, dass eine Erhöhnung der Impedanz zu einer Verlängerung der Lichtbogenlänge und somit zu einer Erhöhung der Strahlungsleistung führt. Eine geringere Impedanz führt wiederum zur Reduzierung der Lichtbogenlänge und somit der Strahlungsleistung, jedoch wird dabei die thermische Konvektion das Lichtbogen erhöht.

Üblicherweise wird bei Abweichungen der gemessenen Höhe der Schaumschlacke vom vorgegebenen Soll-Wert die Kohlenzufuhr für eine bestimmte Zeit erhöht bzw. zurückgefahren, wie dies aus der WO 2010/088972 zu entnehmen ist. Bedingt durch den Förderverzug vergeht bis zur Reaktion auf diese Maßnahme einige Zeit, die in der Größenordnung von ca. 20 Sekunden liegt. Im Vergleich dazu erfolgt die Elektrodenregelung zur Anpassung der Lichtbogenlänge mit deutlich kürzerer Reaktionszeit von ca. einer Sekunde. Dank der Regelung der Lichtbogenlänge geringere Strahlungsverluste, die eine minimierte Abstrahlung an die Ofenwände zur Folge haben. Durch die gezielte, bedarfsorientierte Leistungsoptimierung der Elektroden wird zudem eine gleichmäßige und schnelle Anschmelzung der Schrottbefüllung des Elektrolichtbogenofens erreicht. Ein weiterer Vorteil der optimierten Regelung der Lichtbogenlänge ist die Reduzierung des Einblaskohlenstoffes, wodurch weniger CO₂ Ausstoß durch geringeren Energie- und Kohlenstoffverbrauch erreicht wird. Das Verfahren zeichnet sich somit durch höhere Produktivität, geringere Energieverluste, geringere Betriebszeit und durch Reduktion des Wandverschleißes aus.

Die Messung der Höhe der Schlacke basiert auf den in der WO 2007/009924 und der WO 2010/088972 beschriebenen Methoden. Die Recheneinheit, die die Schlackenhöhe im Ofengefäß auf Grundlage der Messsignale des mindestens einen Körperschallsensors ermittelt, ist insbesondere Teil der Steuer- und/oder Regeleinheit, die der Einfachheit halber weiter als Regeleinheit bezeichnet wird. Nach der Berechnung des Ist-Werts der Schlackenhöhe wird dieser mit dem Soll-Wert oder Soll-Bereich verglichen. Bei Abweichungen generiert die Regeleinheit die Steuer- und/oder Regelsignale zur Anpassung der Lichtbogenlänge.

Um eine hochdynamische und zielgerichtete Steuerung bzw. Regelung Lichtbogenlänge zu gewährleisten, ist der Einschmelzvorgang in mindestens zwei, insbesondere in drei Perioden der Entwicklung der Schlacke unterteilt und die Lichtbogenlänge der zumindest einen Elektrode wird in Abhängigkeit der Entwicklungsperiode reguliert. Hierbei ist insbesondere zwischen den folgenden drei Entwicklungsperioden zu unterscheiden: eine Schlackenaufbau- oder Anfangsperiode, in der die Schlacke entsteht; eine Schlackenperiode, in der die Höhe der Schlacke ein Maximalniveau erreicht, und eine Endperiode, in der die Höhe der Schlacke wieder zurückgeht. Die Reaktion auf die Schlackenveränderung erfolgt somit unter Berücksichtigung der Zeit, die seit Beginn des Einschmelzvorgangs im Elektrolichtbogenofen vergangen ist, da diese Zeit für die Entwicklung der Schlacke entscheidend ist.

Wenn in der Anfangsperiode ein sehr geringer Schlackenzustand gemessen wird, lässt dies auf eine nicht vollständige Einschmelzung des Schrotts schließen. In diesem Fall ist die optimale Regelung der Lichtbogenlänge davon abhängig, in welchem Bereich des Ofengefäßes sich Schrott mit dem größeren Stückigkeitsmaß befindet. Unter Maß für die Stückigkeit eines Feststoffs wird jede konkrete Größe verstanden, welche geeignet ist, Unterschiede in der Stückigkeit von unterschiedlich stückigem Feststoff aufzuzeigen. Unter Stückigkeit des Feststoffs kann jede physikalische Größe des Feststoffs verstanden werden, welche das Brennverhalten des Lichtbogens auf dem Feststoff beeinflusst. Insbesondere kann darunter die Größe eines zusammenhängenden Feststoffsteils und/oder dessen Kompaktheit verstanden werden, wobei Kompaktheit im Sinne eines Maßes für eine vorliegende Feststoffdichteverteilung zu verstehen ist. Ein Verfahren zu Bestimmung des Stückigkeitsmaßes für Feststoff in einem Lichtbogenofen ist in der WO 2009/095293 A2 beschrieben.

Wenn in einer Anfangsperiode unter der zumindest einen Elektrode sich Festsoff mit einem großen Stückigkeitsmaß befindet, wird vorzugsweise beim Unterschreiten des Soll-Werts die Lichtbogenlänge der zumindest einen Elektrode verringert, wodurch eine gesteigerte Konvektionsenergie in der Nähe bzw. unterhalb der Elektrode erzielt wird.

Wenn jedoch Feststoff mit einem großen Stückigkeitsmaß sich weiter weg von der Elektrode in der Nähe der Wand befindet, dann wird vorteilhafterweise beim Unterschreiten des Soll-Werts die Lichtbogenlänge der zumindest einen Elektrode erhöht. Dadurch erhöht sich die Strahlungsleistung und das begünstigt das Aufschmelzen des Schrotts in der Nähe der Wand.

Falls eine Erhöhung der Strahlungsleistung und somit der Abstrahlung an die Ofenwand nicht in Kauf genommen werden soll, wird nach einer alternativen bevorzugten Ausführung beim Unterschreiten des Soll-Werts in der Anfangsperiode die Lichtbogenlänge der zumindest einen Elektrode unverändert gehalten wird und die Betriebszeit der Energiezufuhr wird verlängert.

Gemäß einer bevorzugten Variante wird sowohl in der Schlackenperiode als auch in der Endperiode der Schlackenentwicklung beim Unterschreiten des Soll-Werts die Lichtbogenlänge der zumindest einen Elektrode verringert. Um Verschleiß an den Ofenwänden zu vermeiden, wird hierbei die an die Ofenwand abgegebene Strahlungsleistung reduziert.

Die Überschreitung des Soll-Werts wird insbesondere in allen Entwicklungsperioden der Schlacke gleichermaßen behandelt. Wenn der Ist-Wert den Soll-Wert überschreitet, wird vorzugsweise die Lichtbogenlänge der zumindest einen Elektrode erhöht.

Die Anpassung der Lichtbogenlänge erfolgt insbesondere ergänzend zu einer Regulierung der Kohlenstoff- bzw. Sauerstoffinjektion als Reaktion auf die Veränderung der Schlackenhöhe. Vor diesem Hintergrund wird vorteilhafterweise die Kohlenstoff-Zufuhr in den Elektrolichtbogenofen bei Abweichungen der Schlackenhöhe vom Soll-Wert ebenfalls reguliert. Wenn beispielsweise die Schlackenhöhe über dem Soll-Wert bzw. Sollbereich liegt, wird die Kohleninjektion zurückgefahren. Da die Reaktionszeit auf diesen Vorgang mehrere Sekunden beträgt, wird parallel dazu die Lichtbogenlänge der Elektrode angepasst. Umgekehrt, beim Unterschreiten des Soll-Werts für die Schlackenhöhe wird die Kohlenstoff-Zufuhr erhöht und gleichzeitig wird die Lichtbogenlänge ebenfalls angepasst. Analog wird zweckdienlicherweise die Sauerstoff-Zufuhr in den Elektrolichtbogenofen bei Abweichungen der Schlackenhöhe vom Soll-Wert entsprechend gesteuert bzw. geregelt.

Bevorzugt werden die Schwingungen des Elektrolichtbogenofens mit Hilfe mindestens eines Körperschallsensors, insbesondere eines Beschleunigungssensors, gemessen. Der Körperschall des Lichtbogens wird durch die Schmelze und/oder durch die Schaumschlacke an das Ofengefäß geleitet und kann dort in

Form von Schwingungen gemessen werden. Die Körperschallsensoren sind dabei insbesondere mittelbar und/oder unmittelbar mit dem Ofengefäß bzw. mit der Wand des Ofengefäßes verbunden. Die Körperschallsensoren sind beispielsweise in gleichmäßigen Abständen um das Ofengefäß herum angeordnet. Um die Genauigkeit der Körperschallmessungen zu steigern, ist insbesondere je Elektrode ein Körperschallsensor vorgesehen.

Zweckmäßigerweise weist der Elektrolichtbogenofen drei Elektroden und für je Elektrode ist ein Körperschallsensor vorgesehen. Jeder Elektrode ist dabei eine Zone des Ofengefäßes zugeordnet und die Höhe der Schlacke wird für jede Zone ermittelt. Die Steuerung bzw. Regelung jeder der drei Elektroden erfolgt dabei insbesondere unabhängig von der der anderen zwei Elektroden. Die Schaumschlackenhöhe wird in allen drei Zonen des Ofengefäßes separat gemessen und die Lichtbogenlänge jeder der drei Elektroden wird aufgrund der Messdaten der entsprechenden Zone einzeln an die räumliche Schlackenhöhenverteilung im Ofengefäß angepasst.

Bevorzugt wird mindestens ein Fuzzy-Regler zur Regelung der Elektrode eingesetzt. Fuzzy-Regler sind Systeme, die zur Klasse der Kennfeld-Regler gehören, die der Theorie der Fuzzy-Logik entsprechen. In jedem Regelungsschritt werden drei Teilschritte durchgeführt: Eine Fuzzyfizierung, eine Inferenz und schließlich eine Defuzzyfizierung. Die einzelnen Ein- und Ausgänge werden als linguistische Variablen bezeichnet, zu denen jeweils Fuzzy-Mengen gehören. Ein solcher Fuzzy-Regler kann dabei beispielsweise auf ein in der Recheneinheit hinterlegtes Reaktionsmodell zurückgreifen.

Ein Ausführungsbeispiel der Erfindung wird anhand einer Zeichnung näher erläutert. Hierin zeigen:
- FIG 1: schematisch einen Elektrolichtbogenofen, und
- FIG 2: den zeitlichen Verlauf der Schlackenhöhe in einem Elektrolichtbogenofen.

Gleiche Bezugszeichen haben in den verschiedenen Figuren die gleiche Bedeutung.

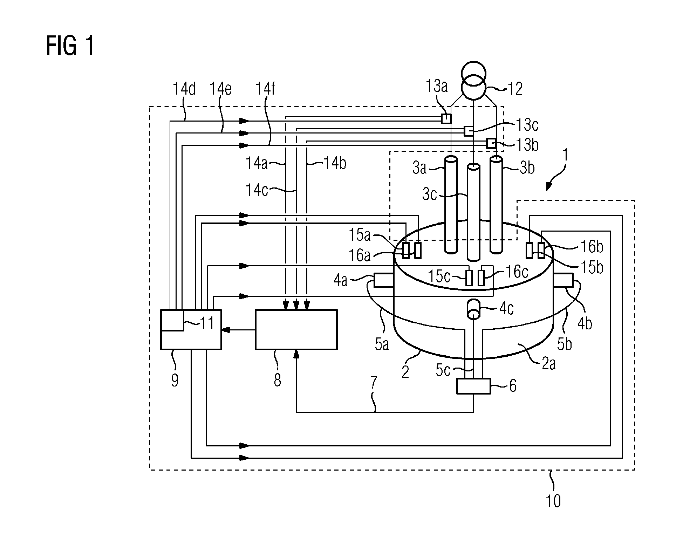

FIG 1 zeigt einen Elektrolichtbogenofen 1 mit einem Ofengefäß 2, in welches mehrere Elektroden 3a, 3b, 3c, die über Stromzuführungen mit einer Stromversorgungseinrichtung 12 gekoppelt sind, geführt sind. Die Stromversorgungseinrichtung 12 weist vorzugsweise einen Ofentransformator auf. Mit Hilfe der drei Elektroden 3a, 3b, 3c werden im Elektrolichtbogenofen 1 Beschickungsmaterialien wie beispielsweise Schrott, aufgeschmolzen. Bei der Erzeugung von Stahl im Elektrolichtbogenofen 1 wird eine hier nicht näher gezeigte Schlacke bzw. Schaumschlacke gebildet.

An einer Wand 2a des Ofengefäßes 2, d.h. an der äußeren Begrenzung des Ofengefäßes 2, sind Körperschallsensoren 4a, 4b, 4c zur Messung von Schwingungen angeordnet. Die Körperschallsensoren 4a, 4b, 4c können mittelbar und/oder unmittelbar mit dem Ofengefäß 2 verbunden sein. Die Körperschallsensoren 4a, 4b, 4c sind insbesondere an den Elektroden 3a, 3b, 3c gegenüberliegenden Seiten der Wand 2a angeordnet. Die Körperschallsensoren 4a, 4b, 4c sind hierbei vorzugsweise als Beschleunigungssensoren ausgebildet und oberhalb der Schaumschlacke im Ofengefäß 2 positioniert. Jedem Körperschallsensor 4a, 4b, 4c ist eine Elektrode 3a, 3b, 3c zugeordnet, somit können räumlich aufgelöste Informationen über die Schlackenhöhe in drei Zonen des Ofengefäßes 2, die um jede der Elektroden 3a, 3b, 3c gebildet sind, gewonnen werden.

Die Messwerte bzw. Signale der Körperschallsensoren 4a, 4b, 4c werden über geschützte Leitungen 5a, 5b, 5c in eine optische Einrichtung 6 geführt und von dieser über einen Lichtwellenleiter 7 in Richtung einer Recheneinheit 8 geleitet. Die Signalleitungen 5a, 5b, 5c sind vorzugsweise vor Hitze, elektromagnetischen Feldern, mechanische Belastung und/oder anderen Belastungen geschützt geführt.

Im gezeigten Ausführungsbeispiel gemäß FIG 1 sind an den Stromzuführungen der Elektroden 3a, 3b, 3c Sensor- und Regeleinrichtungen 13a, 13b, 13c vorgesehen, mit deren Hilfe Strom und/oder Spannung bzw. die den Elektroden 3a, 3b, 3c zugeführte Energie gemessen und geregelt werden können. Die Sensor- und Regeleinrichtungen 13a, 13b, 13c sind mit einer Regeleinheit 8 beispielsweise über als Kabel ausgebildete Signalleitungen 14a, 14b, 14c gekoppelt. Weitere Signalleitungen 14d, 14e, 14f dienen der Verbindung der Sensor- und Regeleinrichtungen 13a, 13b, 13c mit einer Steuer- oder Regeleinrichtung 9, welche von der Recheneinheit 8 die Regelvorgaben erhält. Die Steuer- und/oder Regeleinrichtung 9 wird weiterhin einfach als Regeleinrichtung 9 bezeichnet. Alternativ zum Ausführungsbeispiel gemäß FIG 1 kann die Regeleinheit 8 integraler Bestandteil der Steuer- und/oder Regeleinrichtung 9 sein.

Die Körperschallsensoren 4a, 4b, 4c, die Sensor- und Regeleinrichtungen 13a, 13b, 13c, die Recheneinheit 8 sowie die Regeleinrichtung 9 sind Teil einer Vorrichtung 10, die in FIG 1 durch gestrichelte Linien angedeutet ist.

Dem Elektrolichtbogenofen 1 sind weiterhin Kohlenstoff-Einblasvorrichtungen 15a, 15b, 15c sowie Sauerstoff-Einblasvorrichtungen 16a, 16b, 16c zugeordnet.

In der Recheneinheit 8 werden die Messwerte bzw. Signale der Körperschallsensoren 4a, 4b, 4c und der Sensor- und Regeleinrichtungen 13a, 13b, 13c erfasst und ausgewertet, um die Höhe der Schaumschlacke im Ofengefäß 2 zu ermitteln. Die von den Körperschallsensoren 4a, 4b, 4c ermittelten Messwerte bzw. Signale sind mit der Höhe der Schlacke korreliert, wobei eine zeitliche Auflösung im Bereich von ca. einer bis zwei Sekunden möglich ist. Die Recheneinheit 8 gibt mindestens ein Regelsignal bzw. eine Regelvorgabe, basierend auf der aktuell berechneten Höhe der Schaumschlacke pro Zone im Ofengefäß 2 oder über die Zonen gemittelt an die Regeleinrichtung 9 weiter.

Die Regeleinrichtung 9 regelt nach Vorgabe der Recheneinheit 8 sowohl die Zufuhr von Kohlenstoff und Sauerstoff als auch die Lichtbogenlängen der Elektroden 3a, 3b, 3c über die Impedanz der Elektroden 3a, 3b, 3c. Entscheidend für diese Regelung ist eine zeitliche Differenzierung zwischen den ver-schiedenen Entwicklungsperioden der Schaumschlacke, so dass der Lichtbogen in Abhängigkeit von den verschiedenen Stadien der Schlackenbildung unterschiedlich geregelt wird. Die Regeleinrichtung 9 umfasst bevorzugt einen Fuzzy-Regler 11.

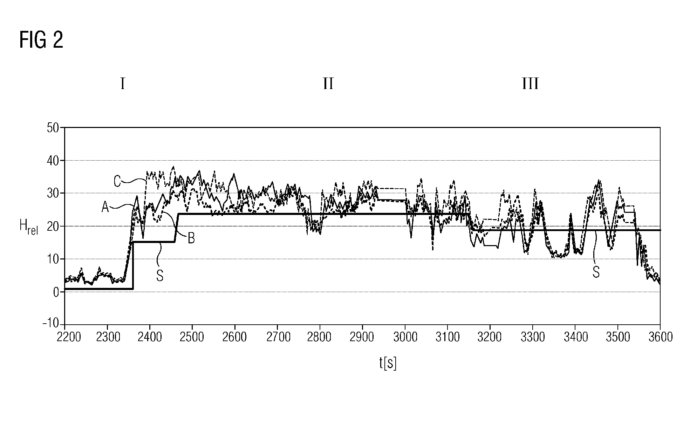

Die Vorgehensweise bei der Regelung des Lichtbogens der Elektroden 3a, 3b und 3c wird anhand des Diagramms in FIG 2 erklärt, in dem die relative Schlackenhöhe Hᵣₑₗ über die Zeit t aufgetragen ist. Die X-Achse stellt die Zeit in Sekunden zu Beginn des Einschmelzvorgangs im Elektrolichtbogenofen 1 dar. Das Messsignal der drei Körperschallsensoren 4a, 4b, 4c, d.h. der ermittelte Verlauf der Schlackenhöhe für die drei Zonen im Ofengefäß 2 ist durch drei oszillierende Linien A, B, C angegeben. Bei der Entwicklung der Schlacke sind dabei im Wesentlichen drei unterschiedliche Stadien zu erkennen. Eine Anfangs- oder Schlackenaufbauperiode I, in der die Schlackenhöhe ansteigt, dauert gemäß FIG 2 bis ca. 2450 Sekunden nach Beginn des Einschmelzvorganges. Gefolgt wird sie von einer Schlackenperiode, in der die Schlackenhöhe über die Zeit gemittelt im Wesentlichen konstant bleibt. Ab ca. 3150 Sekunden nach Beginn des Schmelzvorganges im Elektrolichtbogenofen 1 beginnt eine Endperiode der Schlackenbildung, in der die Fluktuationen der Schlackenhöhe H_{rel.} besonders stark sind und die gemittelte relative Schlackenhöhe etwas niedriger ist als in der Schlackenperiode.

Mit dem Bezugszeichen S wird in Fig. 2 ein Soll-Wert für die relative Schlackenhöhe Hᵣₑₗ gekennzeichnet. Der Soll-Wert S ist in den drei Entwicklungsperioden der Schlacke unterschiedlich. Der Soll-Wert S kann alternativ einen Soll-Bereich zwischen einem zulässigen minimalwert und einem zulässigen Maximalwert darstellen.

In der Anfangsperiode I kann ein starkes Aufschäumen auftreten, jedoch kann in einzelnen Zonen, die nicht genügend aufgeheizt sind, das Aufschäumen stark verzögert sein. Bezüglich der Anfangsperiode I sind somit vier Fälle zu unterscheiden:
1) In einer Zone, wie z.B. die des Messwerts C, ist der Schlackenstand stark überhöht, während in den anderen beiden Zonen der Schlackenstand normal ist. In diesem Fall wird der Lichtbogen an der Elektrode 3c verlängert.
2) Wenn in allen drei Zonen ein überhöhter Schlackenzustand gemessen wird, wird der Lichtbogen aller drei Elektroden 3a, 3b, 3c verlängert, was zu erhöhter Strahlungsleistung führt.
3) Wenn die Schlackenhöhe zu niedrig, erfolgt die Regelung der Lichtbogenlänge in Abhängigkeit davon, ob sich die größere Schrott-Brocken in der Nähe der Elektroden oder der Wand des Elektrolichtbogenofens befinden. Wenn Sie unterhalb der Elektrode sind, wird der Lichtbogen ver-kürzt, wenn sie näher an der Wand sind, wird der Lichtbogen verlängert.
4) Wenn die Schlackenhöhe in allen Zonen A, B, C zu niedrig ist, bedeutet dies, dass die Schmelze länger zur Aufheizung braucht, es wird somit keine Veränderung bezüglich der Lichtbogenlänge vorgenommen.

In der Schlackenperiode II sowie in der Endperiode III sind die gleichen vier Fälle zu unterscheiden, die jedoch teilweise eine unterschiedliche Vorgehensweise erfordern:
1) Wenn in mindestens einer Zone der Schlackenzustand deutlich höher ist als in den anderen Zonen, wird wie im Fall 1 in Bezug auf die Anfangsperiode I behandelt.
2) Wenn alle drei Zonen einen überhöhten Schlackenstand aufweisen, wird wie im Fall 2 in Bezug auf die Anfangsperiode I behandelt.
3) Falls in mindestens einer Zone die Soll-Wertvorgabe S unterschritten wird, dann wird die Lichtbogenlängen der entsprechenden Elektrode 3a, 3b, 3c, die dieser Zone zugeordnet ist, verringert. Dadurch wird die Strahlungsleistung entsprechend nach unten korrigiert, um die Wand 2a im Betrieb zu schonen.
4) Und schließlich, wenn alle Ist-Messwerte A, B, C, für die Schlackenhöhe Hᵣₑₗ in allen Zonen des Elektrolichtbogenofens 1 unter den Soll-Wert S fallen, werden die Lichtbogenlängen an allen drei Elektroden 3a, 3b, 3c reduziert und damit die Strahlungsleistung bis zum zwischenzeitlichen Reagieren der Schlacke auf den eingebrachten Kohlenstoff reduziert.

Das fuzzybasierte Regelungssystem gibt die Korrekturfaktoren für die einzelnen Lichtbogenlängen aus, die in einer Elektrodenregelung verarbeitet und eingestellt werden. Der wesentliche Vorteil der Regelung der Lichtbogenlänge ist die kurze Reaktionszeit von ca. einer Sekunde. Somit kann besonders schnell auf die im Ofengefäß 2 herrschenden Bedingungen reagiert werden. Die Anpassung der Lichtbogenlänge wird insbesondere in Kombination mit einer Regelung der Kohlenstoff- bzw. Sauerstoff-Zufuhr betrieben und dient zu einer Optimierung der Leistungseinbringung und somit zu geringeren Strahlungsverlusten an die Wand des Elektrolichtbogenofens.

## Patentansprüche

1. Verfahren zum Betrieb eines Elektrolichtbogenofens (1), umfassend zumindest eine Elektrode (3a, 3b, 3c) zum Erzeugen einer Schmelze in einem Ofengefäß (2), wobei Schwingungen an einer Wand (2a) des Ofengefäßes (2) gemessen werden, durch welche eine Schlackenhöhe (Hᵣₑₗ) der Schmelze ermittelt wird, **dadurch gekennzeichnet, dass** bei Abweichungen eines ermittelten Ist-Werts (A, B, C) der Schlackenhöhe (Hᵣₑₗ) von einem Soll-Wert (S) Steuer- und/oder Regelsignale (14d, 14e, 14f) gegeben werden, durch welche eine Lichtbogenlänge der zumindest einen Elektrode (3a, 3b, 3c) angepasst wird.

2. Verfahren nach Anspruch 1,
wobei der Einschmelzvorgang in mindestens zwei, insbesondere in drei Perioden (I, II, III) der Entwicklung der Schlacke unterteilt ist und die Lichtbogenlänge der zumindest einen Elektrode (3a, 3b, 3c) in Abhängigkeit der Entwicklungsperiode (I, II, III) reguliert wird.

3. Verfahren nach Anspruch 2,
**dadurch gekennzeichnet, dass** in einer Anfangsperiode (I) der Schlackenentwicklung beim Unterschreiten des Soll-Werts (S) die Lichtbogenlänge der zumindest einen Elektrode (3a, 3b, 3c) verringert wird, wenn unter der zumindest einen Elektrode (3a, 3b, 3c) sich Feststoff mit einem großen Stückigkeitsmaß befindet.

4. Verfahren nach Anspruch 2,
**dadurch gekennzeichnet, dass** in einer Anfangsperiode (I) der Schlackenentwicklung beim Unterschreiten des Soll-Werts (S) die Lichtbogenlänge der zumindest einen Elektrode (3a, 3b, 3c) erhöht wird, wenn sich Feststoff mit einem großen Stückigkeitsmaß in der Nähe der Wand (2a) befindet.

5. Verfahren nach Anspruch 2,
**dadurch gekennzeichnet, dass** in einer Anfangsperiode (I) der Schlackenentwicklung beim Unterschreiten des Soll-Werts (S) die Lichtbogenlänge der zumindest einen Elektrode (3a, 3b, 3c) unverändert gehalten wird und die Betriebszeit der zumindest einen Elektrode (3a, 3b, 3c) verlängert wird.

6. Verfahren nach einem der Ansprüche 2 bis 5, **dadurch gekennzeichnet, dass** in einer Schlackenperiode (II) und in einer Endperiode (III) der Schlackenentwicklung beim Unterschreiten des Soll-Werts (S) die Lichtbogenlänge der zumindest einen Elektrode (3a, 3b, 3c) verringert wird.

7. Verfahren nach einem der vorhergehenden Ansprüche, **dadurch gekennzeichnet, dass** beim Überschreiten des Soll-Werts (S) die Lichtbogenlänge der zumindest einen Elektrode (3a, 3b, 3c) erhöht wird.

8. Verfahren nach einem der vorhergehenden Ansprüche, **dadurch gekennzeichnet, dass** bei Abweichungen der Schlackenhöhe (Hᵣₑₗ) vom Soll-Wert (S) eine Kohlenstoff-Zufuhr in den Elektrolichtbogenofen (1) reguliert wird.

9. Verfahren nach einem der vorhergehenden Ansprüche, **dadurch gekennzeichnet, dass** bei Abweichungen der Schlackenhöhe vom Soll-Wert (S) eine Sauerstoffzufuhr in den Elektrolichtbogenofen (1) reguliert wird.

10. Verfahren nach einem der vorhergehenden Ansprüche, **dadurch gekennzeichnet, dass** die Schwingungen des Elektrolichtbogenofens (1) mit Hilfe mindestens eines Körperschallsensors (4a, 4b, 4c), insbesondere eines Beschleunigungssensors, gemessen werden.

11. Verfahren nach einem der vorhergehenden Ansprüche, **dadurch gekennzeichnet, dass** der Elektrolichtbogenofen (1) drei Elektroden (3a, 3b, 3c) aufweist und die Höhe (Hᵣₑₗ) der Schaumschlacke in einer der jeweiligen Elektrode (3a, 3b, 3c) zugeordneten Zone des Ofengefäßes (2) bestimmt wird.

12. Verfahren nach einem der vorhergehenden Ansprüche, **dadurch gekennzeichnet, dass** ein Fuzzy-Regler (11) zur Regelung der Lichtbogenlänge der zumindest einen Elektrode (3a, 3b, 3c) eingesetzt wird.

13. Vorrichtung (10) zur Durchführung des Verfahrens nach einem der Ansprüche 1 bis 12, umfassend
- mindestens einen Körperschallsensor (4a, 4b, 4c) zum Erfassen von Schwingungen an einer Wand (2a) eines Ofengefäßes (2) eines Elektrolichtbogenofens (1), wobei der Elektrolichtbogenofen (1) zumindest eine Elektrode (3a, 3b, 3c) zum Erzeugen einer Schmelze im Ofengefäß (2) aufweist,
- eine Recheneinheit (8) zum Berechnen des Ist-Werts (A, B, C) einer Schlackenhöhe (Hᵣₑₗ) im Ofengefäß (2),
- sowie eine Steuer- oder Regeleinheit (9) zur Anpassung der Lichtbogenlänge der zumindest einen Elektrode (3a, 3b, 3c) bei Abweichungen des Ist-Werts (A, B, C) der Schlackenhöhe (Hᵣₑₗ) vom Soll-Wert (S).

14. Vorrichtung (10) nach Anspruch 13, **dadurch gekennzeichnet, dass** der Körperschallsensor (4a, 4b, 4c) ein Beschleunigungssensor ist.

15. Vorrichtung (10) nach Anspruch 13 oder 14, **gekennzeichnet durch** einen Fuzzy-Regler (11).

16. Elektrolichtbogenofen (1) mit einer Vorrichtung (10) nach einem der Ansprüche 13 bis 15.

17. Elektrolichtbogenofen (1) nach Anspruch 16, **gekennzeichnet durch** drei Elektroden (3a, 3b, 3c), wobei für jede Elektrode (3a, 3b, 3c) ein jeweiliger Körperschallsensor (4a, 4b, 4c) vorgesehen ist.
